# EUROPEAN PATENT APPLICATION

(11) **EP 1 375 995 A1**
(43) Date of publication of application: **02.01.2004**
(21) Application number: 03014106.3
(22) Date of filing: 23.06.2003
(51) Int. Cl.: F16L 37/36

(54) **Adapter for connection to a cooling system**

(30) Priority: 28.06.2002 IT TO20020567
(71) Applicant: Pres-Block S.P.A., 10040 Caselette (IT)
(72) Inventor: Nicolino, Aldo, 10040 Caselette (IT)
(74) Representative: Cerbaro, Elena, Dr.

(57) **Abstract**

There is described an adapter (1) for connection to a normally-closed inlet/outlet valve (2) of a cooling system. The adapter (1) has a body (10) defining an internal cooling fluid flow cavity (11) and having a first and a second opening section (13, 36; 32, 33, 22) connectable to a cooling fluid circulating circuit and the valve (2) respectively; a manually operated actuating member (14) movable inside the cavity (11) of the body (10) to open the valve (2) of the cooling system; and a valve member (20) movable inside the cavity (11) into a first and a second work configuration respectively disabling and enabling hydraulic connection of the first and second opening section (13, 36; 32, 33, 22). The valve member (20) cooperates directly with the first opening section (13, 36) of the body (10) to disable/enable cooling fluid flow through the first opening section (13, 36), and is located inside the cavity (11) independently of the position assumed by the actuating member (14).

## Description

The present invention relates to an adapter for connection to a normally-closed inlet/outlet valve of a cooling system, e.g. an automotive air conditioning system, to fill the system with cooling fluid, normally Freon, or to drain the cooling fluid from the cooling system.

As is known, current regulations governing the emission of pollutants into the environment are extremely strict, particularly as regards dispersion into the atmosphere of cooling fluids, such as Freon.

Adapters have therefore been designed, which fit onto the cooling fluid feed or drain line, are connected mechanically to the outer casing of the inlet/outlet valve of the cooling system to be filled or drained, and have manually operated actuating means to open the inlet/outlet valve once the connection is made, so as to permit cooling fluid flow to and from the cooling system with absolutely no dispersion into the atmosphere.

As described for example in US Patent 5,139,049, adapters of the above type are known comprising a tubular body, which is open at one end to receive and lock in position the outer casing of the inlet/outlet valve of the cooling system to be filled or drained, is connected via a radial opening to the cooling fluid feed or drain line, and houses a valve assembly for controlling cooling fluid flow between the feed or drain line and the cooling system.

More specifically, the valve assembly is defined by a manually operated actuating member comprising a rod movable axially inside the tubular body cavity to interact with and open the cooling system inlet/outlet valve; and a sleeve member, which extends about the actuating member rod, slides in fluidtight manner inside said cavity, and has an inner annular projection normally maintained engaging an intermediate projection on the rod in fluidtight manner by the thrust exerted on the sleeve member by a garter spring.

Once the adapter is connected mechanically to the inlet/outlet valve of the cooling system to be filled or drained, cooling fluid flow to and from the cooling system is activated by moving the actuating member axially in the thrust direction of the spring acting on the sleeve member, so that the actuating member rod penetrates inside the inlet/out valve casing to open the valve, while the outer casing of the valve defines a stop preventing the sleeve member from following the axial movement of the rod. As the cooling system inlet/outlet valve opens, therefore, the projection on the sleeve member is simultaneously detached from the projection on the actuating member rod to permit cooling fluid flow between the sleeve member and actuating member.

In known adapters, cooling fluid flow through the tubular body cavity is therefore cut off by the fluidtight connection of two members sliding inside the cavity.

Manufacture of adapters of the above type therefore involves strict dimensional and shape tolerances between the mutually cooperating parts of the above members, thus resulting in high cost and complex, painstaking assembly work.

It is an object of the present invention to provide an adapter for connection to a cooling system, designed to provide a straightforward, low-cost solution to the aforementioned drawbacks typically associated with known adapters.

According to the present invention, there is provided an adapter for connection to a cooling system, comprising:
- a body, which defines an internal cooling fluid flow cavity, is connectable mechanically to an outer casing of a normally-closed inlet/outlet valve of said cooling system, and has a first and a second opening section connectable to a cooling fluid circulating circuit and said valve respectively;
- a manually operated actuating member housed at least partly in said cavity of said body, and movable inside the cavity to open said valve of said cooling system; and
- at least one valve member movable inside said cavity of said body into at least a first and a second work configuration respectively disabling and enabling hydraulic connection of said first and said second opening section;
characterized in that said valve member cooperates directly with said first opening section of said body to disable/enable cooling fluid flow through the first opening section; and in that the position of said valve member inside said cavity is independent of the position assumed by said actuating member.

A preferred, non-limiting embodiment of the present invention will be described by way of example with reference to the accompanying drawings, in which:
Figure 1 shows an axial section of an adapter in accordance with the present invention, for connection to a cooling system terminal;
Figure 2 shows an axial section of the Figure 1 adapter connected to the cooling system terminal.

Number 1 in the accompanying drawings indicates as a whole an adapter in accordance with the present invention, connectable along its axis A to a valved terminal 2 of a cooling system (not shown), e.g. a vehicle air conditioning system, to permit flow of a cooling fluid, e.g. Freon, to and from the cooling system.

More specifically, adapter 1 may be connected to terminal 2 to both recharge and drain the cooling fluid from the cooling system.

Terminal 2 is a standard type and therefore only described below as required for a clear understanding of the present invention. A typical example of a cooling system valved terminal is described and illustrated, for example, in US 4,892,117.

Terminal 2 comprises a substantially cylindrical tubular body 3, of axis A, which defines an axial cooling fluid passage 4, is connected at one end to a known circuit component (not shown) of the cooling system, and has, at the opposite end, an end portion 5 smaller in outside diameter than the rest of body 3 and which fits in fluidtight manner to adapter 1.

Terminal 2 also comprises a valve member 6 mounted to slide axially inside passage 4 of body 3, and maintained by a garter spring 7 in a position closing a portion 8 of passage 4 in fluidtight manner. Valve member 6 is movable, in opposition to spring 7, into an open position engaging radially loosely a portion 9 of passage 4 of body 3 adjacent to and larger in diameter than portion 8, so as to permit cooling fluid flow to and from the cooling system.

Adapter 1 comprises a substantially cylindrical tubular outer body 10, of axis A, which defines an inner cooling fluid flow cavity 11, and is connectable to terminal 2 through an axial end opening 12, and to a cooling fluid feed or drain conduit (not shown) through a radial opening 13. Adapter 1 also comprises a manually operated actuating member 14 fitted to body 10 at the opposite end to opening 12, and having a work portion 16 movable axially inside cavity 11 to interact with valve member 6 of terminal 2 connected to adapter 1, and to open valve member 6 in opposition to spring 7.

Adapter 1 also comprises a sleeve-shaped valve member 20, of axis A, which is housed inside cavity 11, about work portion 16 of actuating member 14, and is movable axially to disable/enable hydraulic connection of openings 12 and 13 of body 10.

More specifically, body 10 is defined by two tubular members 21, 22, of axis A, screwed to each other. Tubular member 21 comprises a cylindrical, externally threaded first portion 23 connected to actuating member 14 as described later; and a cylindrical second portion 24, which is larger in outside diameter than portion 23, defines an annular shoulder 25 with portion 23, and has an internal thread at the opposite end to that from which portion 23 originates.

Tubular member 22 comprises a cylindrical main portion 26, from one axial end of which extends a cylindrical projecting portion 27 threaded externally and engaging the internal thread on the end of tubular member 21. With the rest of tubular member 22, projecting portion 27 defines an outer annular shoulder 28 facing the opposite way to shoulder 25 of tubular member 21.

Cavity 11 is defined by four cylindrical zones 30, 31, 32, 33 of different diameters, two of which (30, 31) are defined by tubular member 21, and the other two (32, 33) by tubular member 22.

More specifically, zone 30 of cavity 11 is formed at portion 23 of tubular member 21, and is smaller in diameter than the adjacent zone 31 defined by tubular member 21. Similarly, zone 32 of cavity 11 is formed at projecting portion 27 of tubular member 22, and is smaller in diameter than the adjacent zone 33 defined by tubular member 22. Zones 30 and 31 and zones 32 and 33 define respective facing annular shoulders 34, 35 for the purpose explained later on.

Opening 12 is therefore defined by zone 33 of cavity 11, while opening 13 is defined by a threaded radial through hole formed in portion 24 of tubular member 21 and engaged by a threaded end of a fitting 36 for connecting adapter 1 to the cooling fluid feed or drain conduit.

Tubular member 22 is fitted externally with a known releasable lock mechanism 40, which is activated selectively to connect adapter 1 mechanically to terminal 2.

Lock mechanism 40 substantially comprises a number of balls 41 housed in rolling manner inside respective radial through seats in portion 26 of tubular member 22, and which project radially from portion 26 inwards of zone 33 of cavity 11 to engage an outer annular groove 42 on terminal 2; and a manually operated ring nut 43, of axis A, fitted in axially sliding manner to tubular member 22 and to portion 24 of tubular member 21 to control the radial movement of balls 41 along the respective seats.

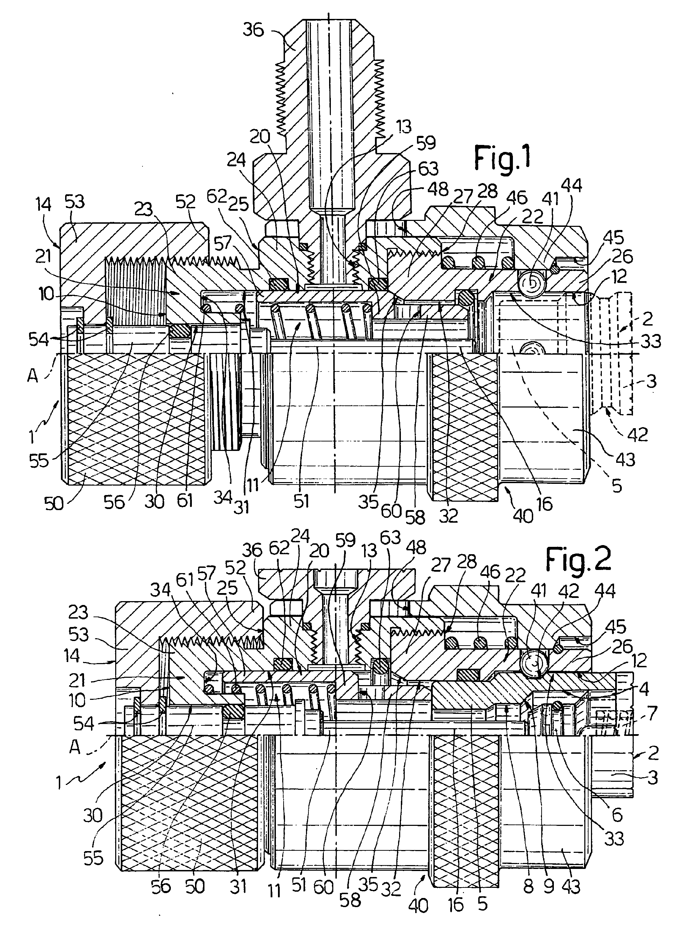

More specifically, balls 41 are equally spaced about axis A, and are movable between a projecting position (shown in the accompanying drawings), in which they project radially inside portion 26 of tubular member 22 and can therefore engage groove 42 on terminal 2 (Figure 2) to lock the terminal to adapter 1, and a withdrawn position (not shown), in which they are contained within the inner profile of portion 26 of tubular member 22 to permit release or insertion of terminal 2.

Ring nut 43 is defined by a cylindrical body, which is fitted in axially sliding manner to the whole of portion 24 of tubular member 21, projects axially from tubular member 21 over tubular member 22, and has, at one axial end and facing shoulder 28, an inner annular projection 44 which slides along portion 26 of tubular member 22. Along an axial portion opposite to that facing shoulder 28, projection 44 defines an annular end groove 45 engaged by balls 41 in the withdrawn position.

Ring nut 43 is loaded by a garter spring 46 wound about portion 26 of tubular member 22 and interposed between shoulder 28 of tubular member 22 and projection 44. Spring 46 normally maintains ring nut 43 in a first work position (shown in the accompanying drawings), in which it covers the whole of tubular member 22 and portion 24 of tubular member 21, and projection 44 pushes balls 41 into the projecting position. Ring nut 43 is movable manually, in opposition to spring 46, into a second work position (not shown), in which it extends partly over portion 23 of tubular member 21, and groove 45 is located at the seats housing balls 41 to enable balls 41 to move into the withdrawn position when terminal 2 is inserted inside opening 12. The first work position of ring nut 43 is defined by projection 44 resting against a stop ring fitted externally to portion 26 of tubular member 22 and located on the opposite side of balls 41 to portion 27.

To move between the first and second work position without interfering with fitting 36, ring nut 43 has a slot 48 through which fitting 36 is fitted loosely.

Actuating member 14 comprises an internally threaded cylindrical ring nut 50 fitted to portion 23 of tubular member 21 and fitted inside with a rod 51 defining, at one end, portion 16 interacting with terminal 2.

More specifically, ring nut 50 has one end 52 facing shoulder 25, and, at the opposite end, has an annular flange 53 extending radially inwards of ring nut 50 and fitted, in axially fixed and angularly free manner by two retaining rings 54, to an end portion 55 of rod 51 opposite portion 16 interacting with terminal 2. More specifically, retaining rings 54 project radially from rod 51 and retain between them a radially inner edge of flange 53, so that rotation and translation of ring nut 50 with respect to body 10 corresponds to straightforward axial translation of rod 51 inside cavity 11.

End portion 55 of rod 51 engages zone 30 of cavity 11 in fluidtight manner, and is larger in outside diameter than portion 16 interacting with terminal 2. More specifically, fluidtight sealing between end portion 55 of rod 51 and the wall bounding zone 30 is effected by an O-ring 56 engaging an outer annular groove on end portion 55.

By screwing/unscrewing ring nut 50 on portion 23 of tubular member 21, actuating member 14 is movable between a withdrawn position (Figure 1) in which it cannot interact with valve member 6 of terminal 2 connected mechanically to adapter 1, and a forward position (Figure 2) in which, by means of work portion 16 of rod 51, it keeps valve member 6 of terminal 2 in the open position.

More specifically, in the withdrawn position (Figure 1), ring nut 50 is positioned with flange 53 and end 52 detached axially from portion 23 and shoulder 25 of body 10 respectively; and, in the forward position (Figure 2), ring nut 50 is positioned with end 52 resting against shoulder 25, and defines a stop preventing ring nut 43 of lock mechanism 40 from moving into the second work position. When connecting or disconnecting adapter 1 to or from terminal 2, actuator 14 must therefore be set to the withdrawn position or at least an intermediate position between the withdrawn and forward positions, to avoid damaging terminal 2 by excessively compressing spring 7 loading valve member 6.

As shown in Figure 1, complete detachment of actuating member 14 from body 10 is prevented by an outer annular projection on end portion 55 of rod 51 resting axially against the wall bounding zone 30 of cavity 11.

According to the present invention, valve member 20 cooperates directly with the portion of body 10 defining opening 13 to disable/enable cooling fluid flow through opening 13, and is located inside cavity 11 independently of the position assumed by actuating member 14.

More specifically, valve member 20 is mounted radially loosely about rod 51 of actuating member 14, and comprises a cylindrical first portion 57 sliding along the surface defining zone 31 of cavity 11; a cylindrical second portion 58 smaller in outside diameter than portion 57 and movable radially loosely along the surfaces defining zones 31 and 32 of cavity 11; and an annular disk-shaped intermediate third portion 59 connecting portions 57 and 58.

Valve member 20 also comprises, at portion 58, a number of radial through holes 60 which, when valve member 20 is moved towards zone 30 of cavity 11, are positioned close to opening 13 to connect opening 13 to cavity 11 and therefore to passage 4 of terminal 2 when connected to adapter 1 and open.

More specifically, valve member 20 is loaded - by a garter spring 61 housed inside valve member 20 and interposed between disk-shaped portion 59 and shoulder 34 of body 10 - into a first work configuration (Figure 1) in which portion 57 closes opening 13 in fluidtight manner, and portion 59 rests against shoulder 35 of body 10. Fluidtight closure of opening 13 by valve member 20 in the first work configuration is effected by two O-rings 62, 63 interposed between portion 57 of valve member 20 and portion 24 of tubular member 21, and located on opposite sides of opening 13. More specifically, rings 62, 63 engage respective inner annular grooves formed in portion 24 of tubular member 21 and on opposite sides of opening 13.

Valve member 20 is movable in opposition to spring 61 - e.g. by the thrust exerted by end portion 5 of terminal 2 being inserted inside cavity 11 - into a second work configuration (Figure 2), in which portion 57 is detached from ring 63 adjacent to shoulder 35, and holes 60 are at least partly interposed axially between ring 63 and opening 13, thus permitting cooling fluid flow between the inside of valve member 20 and fitting 36.

In actual use, to connect adapter 1 to terminal 2, actuating member 14 must be set to the withdrawn position (Figure 1), or at least shifted far enough from the forward position to allow ring nut 43 of lock mechanism 40 to move axially from the first to the second work position.

Terminal 2 and adapter 1 are connected mechanically by acting manually on ring nut 43 to keep it in the second work position in opposition to spring 46, and by simultaneously inserting terminal 2 through opening 12 into cavity 11.

At this stage, end portion 5 of terminal 2 slides in fluidtight manner inside zone 32 of cavity 11, while the rest of terminal 2 engages zone 33 of cavity 11 and, as it moves, shifts balls 41 from the projecting position to the withdrawn position engaging groove 45 in projection 44 of ring nut 43.

As it moves axially inside cavity 11, end portion 5 of terminal 2 pushes valve member 20, in opposition to spring 61, into the second work configuration connecting holes 60 to opening 13 and fitting 36.

Once terminal 2 is inserted fully inside cavity 11 of adapter 1, ring nut 43 is released, and is restored by spring 46 to the first work position, thus pushing balls 41 into the projecting position engaging groove 42 on terminal 2. In this condition, adapter 1 is connected mechanically to terminal 2, but not hydraulically, on account of cooling fluid flow through terminal 2 being disabled by valve member 6 in the closed position closing passage 4.

At this point, by screwing ring nut 50 on portion 23 of body 10, actuating member 14 moves axially from the withdrawn to the forward position, in which work portion 16 of rod 51 acts on and moves valve member 6 of terminal 2 into the open position.

Adapter 1 and terminal 2 are disconnected by simply acting on ring nut 43 of lock mechanism 40 in the same way as described above for connection. More specifically, by keeping ring nut 43 in the second work position, balls 41 are free to roll inside their respective seats into the withdrawn position engaging groove 45 on ring nut 43, so that terminal 2 can be extracted from body 10; and valve member 20 is immediately pushed by spring 61 back into the first work configuration closing opening 13 in fluidtight manner, thus preventing any cooling fluid from escaping into the surrounding environment.

The advantages of adapter 1 according to the present invention will be clear from the foregoing description.

In particular, by virtue of actuating member 14 and valve member 20 being located independently inside cavity 11 of adapter 1, and performing separate functions involving no mutual interaction (i.e. opening cooling system terminal 2 by actuating member 14, and controlling cooling fluid flow through fitting 36 by valve member 20), the only dimensional and shape requirements to be met by the actuating and valve members are those relating to engagement of cavity 11 of body 10. As compared with the known adapters described previously, the actuating and valve members are therefore easier and cheaper to produce and assemble, by involving no matching in terms of shape and size.

Clearly, changes may be made to adapter 1 according to the present invention without, however, departing from the scope of the accompanying Claims.

## Claims

1. An adapter (1) for connection to a cooling system, comprising:
- a body (10), which defines an internal cooling fluid flow cavity (11), is connectable mechanically to an outer casing (3) of a normally-closed inlet/outlet valve (2) of said cooling system, and has a first and a second opening section (13, 36; 32, 33, 22) connectable to a cooling fluid circulating circuit and said valve (2) respectively;
- a manually operated actuating member (14) housed at least partly in said cavity (11) of said body (10), and movable inside the cavity (11) to open said valve (2) of said cooling system; and
- at least one valve member (20) movable inside said cavity (11) of said body (10) into at least a first and a second work configuration respectively disabling and enabling hydraulic connection of said first and said second opening section (13, 36; 32, 33, 22);
**characterized in that** said valve member (20) cooperates directly with said first opening section (13, 36) of said body (10) to disable/enable cooling fluid flow through the first opening section (13, 36); and **in that** the position of said valve member (20) inside said cavity (11) is independent of the position assumed by said actuating member (14).

2. An adapter as claimed in claim 1, **characterized in that** said valve member (20) comprises a first portion (57) which can be positioned, in said first work configuration, closing said first opening section (13, 36); and a second portion (58) having at least one through opening (60) which can be positioned to communicate with said first opening section (13, 36) by the valve member (20) moving into said second work configuration.

3. An adapter as claimed in Claim 1 or 2, **characterized in that** said body (10) and said cavity (11) have a longitudinal axis (A); and **in that** said first opening section (13, 36) is oriented radially with respect to said axis (A), and said second opening section (32, 33, 22) defines an end zone (33) of said cavity (11).

4. An adapter as claimed in Claim 3, **characterized in that** said actuating member (14) is fitted to said body (10) to close said cavity (11) at the opposite end to said second opening section (32, 33, 22), and comprises a work portion (16) movable along said axis (A) to and from the second opening section (32, 33, 22) to interact with said valve (2) of said cooling system.

5. An adapter as claimed in claim 4, **characterized in that** said actuating member (14) is movable, along said axis (A) and with respect to said body (10), between a first position in which said work portion (16) engages said second opening section (32, 33, 22) of said body (10) and can open said valve (2) of said cooling system, and a second position spaced axially from said first position by such an amount as to prevent said work portion (16) from opening said valve (2) of said cooling system.

6. An adapter as claimed in Claim 5, **characterized by** comprising releasable locking means (40) activated selectively to mechanically connect/disconnect said body (10) and said casing (3) of said valve (2) of said cooling system; and in that said actuating member (14) comprises disabling means (52) for disabling activation of said locking means (40) and which are active in said first position of the actuating member (14).

7. An adapter as claimed in any one of Claims 4 to 6, **characterized in that** said valve member (20) comprises a sleeve (57, 58, 59) extending radially loosely about said work portion (16) of said actuating member (14) and loaded axially by elastic means (61) into said first work configuration.

8. An adapter as claimed in any one of Claims 2 to 7, **characterized by** comprising two sealing members (62, 63) located on opposite sides of said first opening section (13, 36) and interposed between said body (10) and said valve member (20); said opening (60) in said valve member (20) being positionable at least partly interposed axially between one (63) of said sealing members (62, 63) and said first opening section (13, 36) in said second work configuration of the valve member (20).
